# EUROPEAN PATENT SPECIFICATION

(11) **EP 4 245 618 B1**
(45) Date of publication and mention of the grant of the patent: **22.01.2025**
(21) Application number: 22162339.0
(22) Date of filing: 15.03.2022
(51) Int. Cl.: B60T 7/04

(54) **A SYSTEM AND A METHOD FOR CONTROLLING ACTUATORS BASED ON PEDAL POSITIONS IN A VEHICLE**
SYSTEM UND VERFAHREN ZUR STEUERUNG VON AKTUATOREN BASIEREND AUF PEDALSTELLUNGEN IN EINEM FAHRZEUG
SYSTÈME ET PROCÉDÉ DE COMMANDE D'ACTIONNEURS EN FONCTION DES POSITIONS DE PÉDALE DANS UN VÉHICULE

(43) Date of publication of application: 20.09.2023
(73) Proprietor: VOLVO TRUCK CORPORATION, 405 08 Göteborg (SE)
(72) Inventor: KRISHNAKUMAR, Niveditha, 417 06 Göteborg (SE); PONNUSAMY, Nithyanandan, 641107 Tamil Nadu (IN)
(74) Representative: Zacco Sweden AB

(56) References cited:
- JP-A- 2007 118 861
- JP-A- 2016 196 225
- KR-B1- 102 098 747
- US-A1- 2011 282 545
- US-A1- 2013 245 894
- US-A1- 2016 275 795
- US-A1- 2019 050 655
- US-A1- 2020 086 873

## Description

### TECHNICAL FIELD

The present invention relates to a system for controlling actuators based on pedal positions in a vehicle. The present invention also relates to a vehicle comprising such a system. The present invention further relates to a method for controlling actuators based on pedal positions in a vehicle. Additionally, the present invention relates to a computer program, to a computer readable medium, and to a control unit.

The invention can be applied in heavy-duty vehicles, such as trucks, buses and construction equipment. The invention can also be applied in light-duty and medium-duty vehicles. Although the invention will mainly be described with respect to a heavy-duty vehicle, the invention is not restricted to this particular vehicle, but may also be used in other vehicles such as passenger cars.

### BACKGROUND

In modern vehicles, the position of a pedal may be detected by a dedicated pedal position sensor. For example, there is a one sensor for the accelerator pedal, another sensor for the brake pedal and yet another sensor for the clutch pedal. As a driver presses a pedal, the associated sensor will detect the movement of the pedal and send a sensor signal to a control unit, and the control unit will then send an actuator signal to an associated actuator. An example of such a sensor is, for instance, a resistive type sensor using a potentiometer. A drawback of such a sensor is its degradation over time. In other words, it will become mechanically worn and will therefore become less accurate.

US 2003/067215 A1 discloses an infrared sensor mounted in the pedal which measures the distance from the pedal to an approaching foot of the driver. It also discloses another sensor that senses the distance between the pedal and a splashboard. While these sensors may reduce the risk of mechanical wear of the sensors and therefore reduce the risk of degradation over time, there is still room for improvement.

US 2019/050655 A1 discloses an imaged-based detection system, which may be implemented for a vehicle. The image-based detection system comprises one or more image sensors configured to receive images of a vicinity of a control, and one or more processors configured to identify within the images a control actuator and the control. A trigger action of the control actuator relative to the control is detected based on the images. According to the detected trigger action a switch is made from a normal control mode to a safety mode.

### SUMMARY

An object of the present invention is to provide system and a method which at least partly provide an improvement over the prior art. This and other objects are accomplished by a system and a method as defined in the accompanying independent claims. Some non-limiting exemplary embodiments are presented in the dependent claims.

The inventors have realized that by using a camera which captures an image of two or more pedals, which captured image may be analysed by a control unit, the positions of the different pedals may effectively be determined. Thus, multiple sensors may be eliminated by using a single image-capturing camera. In this way, the risk of mechanical wear is reduced. In addition, the number of components may be reduced, since a single camera can capture an image which includes more than one pedal, while the prior art IR sensor technology is based on measuring the time for a transmitted wave to propagate and be reflected back to the sensor, and therefore requiring one sensor for each pedal.

According to a first aspect of the invention, there is provided a system for controlling actuators based on pedal positions in a vehicle, the system comprising:
- a control unit,
- a camera configured to capture an image containing two or more pedals in a vehicle and to provide the image to the control unit,
wherein the control unit is configured to:
- determine for each pedal, based on the provided image, the current position of the pedal relative to a fixed structure in the vehicle or relative to a reference position of the pedal, and
- control, based on the determined position, an actuator associated with the pedal.

By providing a camera which captures an image that shows two or more pedals, the control unit can control the associated actuators for all those pedal even though only one camera is used. For instance, if a driver presses the clutch pedal and the brake pedal at the same time, a control in a system of the present inventive concept would detect that both pedals have been pressed even though only one camera is used, as the camera and the resulting image provided by the camera covers both/all pedals.

It should be understood that the image provided by the camera to the control unit may suitably be in digital form, i.e. a digital image. Thus, the control unit may suitably analyse a digital image rather than an analogue image.

It should be understood that the actual controlling of the actuators, once the pedal positions have been determined, may be performed in any conventional way. Typically, the control unit may be configured to send an output/actuating signal to the respective actuator. For instance, if the control unit determines that the accelerator pedal has been pressed, then an accelerator output signal is sent to the actuator associated with the accelerator pedal. Similarly, a brake output signal and a clutch output signal, may in the event of the brake pedal and the clutch pedal being pressed, be send to a respective associated actuator. The actuators may be conventional actuators. For instance, the actuator associated with the accelerator pedal may comprise a motor that receives the output signal from the control unit, which motor moves a throttle valve to an appropriate position based on the output signal from the control unit.

As mentioned above, the control unit is configured to determine the current position of the pedal relative to a fixed structure in the vehicle or relative to a reference position of the pedal. A fixed structure may be any suitably structure that is intended to be still in the vehicle. For instance, such a fixed structure may be a base plate connected to the pedal. The pedal may be movably connected to such a fixed based plate. However, other fixed structures are also conceivable, such as a panel, rails, etc. The fixed structure may suitably be provided with a distinguishable point or area, which the control unit can identify in the provided image. Similarly the pedal may suitably be provided with a distinguishable point or area, which the control unit can identify in the provided image. In such cases, the control unit may analyse the image and determine the distance between the point on the pedal and the point on the fixed structure.

From the above it can be understood that, according to at least one exemplary embodiment, the camera is configured to capture an image containing two or more pedals in a vehicle, and also containing at least one fixed structure, and to provide the image to the control unit, wherein the control unit is configured to determine for each pedal, based on the provided image containing the pedals and the fixed structure, the current position of the pedal, and to control an actuator associated with the pedal based on the determined position.

Instead of comparing the position of the pedal relative to a fixed structure, the control unit may, in at least some exemplary embodiments compare the current position of the pedal relative to a reference position of the pedal. Such a reference position may, for instance, be the original non-pressed position of the pedal, i.e. the position of the pedal before it is pressed by a driver's foot. For example, when manufacturing the vehicle or when installing the system of the present invention in a vehicle, an initial reference image may be taken by the camera and stored in an electronic memory. Later on, in use, the control unit will be able to compare the initial reference image with new captured images to determine the position of each pedal.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where it includes a programmable device such as the microprocessor, microcontroller or programmable digital signal processor mentioned above, the processor may further include computer executable code that controls operation of the programmable device.

According to at least one exemplary embodiment, for each pedal, the control unit is configured to:
- detect in the provided image one or more predefined points on the pedal,
- determine the position(s) of the detected one or more predefined points in the provided image, and
- calculate, based on the determined position(s) of the one or more detected predefined points, the position of each pedal relative to the fixed structure or relative to its reference position.

Thus, the control unit may search for a predefined point in the provided image, the predefined point being an identifier used for determining the position of the pedal. Such a predefined point or identifier may be a distinguishable structure in the main pedal material itself, or it may be an item, marking, etch that has been connected at a certain location of the pedal. The control unit detects the position of the predefined point (identifier) and determines its position in the image. The control unit can then, in some exemplary embodiments, compare this position in the image with the position of the fixed structure, and thereby calculate the position of the pedal relative to the fixed structure, and then control the actuator based on this calculation. In other exemplary embodiments, the control unit may compare the determined position of the predefined point with a reference position of the predefined point (the reference position being stored in an electronic memory), and thereby calculate the pedal position and control the associated actuator based on this calculation. Using two or more predefined points on each pedal, and determining the positions of those points, will provide more confidence in the calculations made by the control unit.

From the above, it should be understood that the image does not necessarily need to include the entire pedal. What is important in the above mentioned exemplary embodiments, is that at least the part of the pedal that presents the predefined point (identifier), is included in the image. Thus, in the context of this invention, it should be understood that the fact that the camera is configured to capture an image containing two or more pedals encompasses that the entire pedals are included in the image or portions of the pedals are included in the image. Furthermore, it may be conceivable that one pedal is fully included while only a portion of another pedal is included in the image.

According to at least one exemplary embodiment, the camera is configured to capture and provide a sequence of images, wherein for at least one of said pedals, the control unit is configured to:
- compare the position of the pedal in two or more of the images in said sequence of images, to detect a positional change of the pedal, and
- control the associated actuator based on the detected positional change of the pedal. By comparing the position of the pedal in two or more sequential images a movement of the pedal is detectable. The camera may typically be a high-speed camera capable of achieving thousands of frames per second, or even more.

According to at least one exemplary embodiment, one of said pedals is a brake pedal, wherein the control unit is configured to send an emergency brake signal to a brake actuator associated with the brake pedal when the detected positional change per unit of time exceeds a predetermined threshold.

Thus, when the control unit detects a fast depressing of the brake pedal it will send an emergency brake signal to the brake actuator in order to urgently decelerate the vehicle. The predetermined threshold is suitably selected so that it is clearly separated from ordinary controlled braking under normal driving conditions, such as braking when approaching a red light or start/stop scenarios when driving through city traffic, etc.

According to at least one exemplary embodiment, said camera is a thermographic camera configured to capture and create images by using infrared radiation emitted from said pedals. This is advantageous because thermographic cameras do not require any ambient brightness and operate just as well at night as in daytime.

As has already been mentioned above, the position of the pedal may be determined in different ways, such as relative to a fixed structure, or relative to reference position of the pedal itself. This different exemplary options will briefly be discussed below.

According to at least one exemplary embodiment, at least one of the pedals is connected to a base plate, wherein said fixed structure comprises said base plate, wherein the control unit is configured to determine for said at least one of the pedals, based on the provided image, the position of the pedal relative to its connected base plate. Thus, the image captured by the camera may suitably contain both the pedal and the base plate. The control unit may therefore from a single image determine the distance between the pedal and the base plate. The control unit may suitably translate the distance into a certain actuator signal. For instance, in case of the pedal being an accelerator pedal, the smaller the distance, the larger the acceleration request. The correspondence between different distances and different requested output values to which the distances are translated may, for instance, be provided in a look-up table accessible by the control unit, or calculated by the control unit using a mathematical formula.

According to at least one exemplary embodiment, the system comprises an electronic memory in which a reference image is stored, the reference image containing said two or more pedals when they are in their respective non-pressed original positions, wherein the control unit comprises or has access to said electronic memory, wherein the control unit is configured to determine the position of each pedal by comparing the captured image provided by the camera with said reference image. This is advantageous as the control unit does not need to look for a fixed structure. Thus, this exemplary embodiment may advantageously be used for pedals without base plates, such as suspended type pedals. However, this exemplary embodiment may, of course, be implemented for any type of pedal, i.e. also for those connected to a base plate.

According to at least one exemplary embodiment, the camera is configured to capture an image containing an accelerator pedal and a brake pedal, wherein the control unit is configured to:
- send an acceleration signal, based on the determined position of the accelerator pedal, to an associated acceleration actuator,
- a brake signal, based on the determined position of the brake pedal, to an associated brake actuator.

Since the control unit receives an image that contains two or more pedals, such as the above exemplified accelerator pedal and brake pedal, the control unit may control the respective associated actuators in parallel, if needed. For instance, the captured image contains both the brake pedal and the clutch pedal, the control unit may from the received image determined that the driver has pressed both pedals and therefore actuates both the brake and the clutch actuator, respectively. The image captured by the camera may of course contain three pedals: accelerator pedal, brake pedal and clutch pedal, in which case the control unit may be configured to control all three associated actuators. For instance, according to at least one exemplary embodiment, the captured image further contains a clutch pedal, wherein the control unit is configured to send a clutch actuating signal to a clutch actuator based on the determined position of the clutch pedal.

In addition to controlling the actuators, in at least some exemplary embodiments, the control unit may, when analysing the received image from the camera, be configured to detect foreign objects in the pedal area, and issue a warning signal to alert the driver thereof. Such a warning signal may, for instance, be implemented as a visual warning on a display or a light turned on, etc. or as an audible warning such as a voice message or an audible tone, etc. or a tactile warning such as a vibration discernible by the user's hands, feet, or other body parts.

According to a second aspect of the invention, there is provided a vehicle. The vehicle of the second aspect comprises a system of the first aspect, including any embodiment thereof. The advantages of the vehicle according to the second aspect are largely analogous to the advantages of the system according to the first aspect, including any embodiment thereof.

According to a third aspect of the invention, there is provided a computer-implemented method for controlling actuators based on pedal positions in a vehicle, the method comprising:
- receiving from a camera a captured image containing two or more pedals in a vehicle,
- determining for each pedal based on the received image, the position of the pedal relative to a fixed structure in the vehicle or relative to a reference position of the pedal, and
- controlling based on the determined position, an actuator associated with the pedal. The advantages of the method of the third aspect largely correspond to the advantages of the system of the first aspect, including any embodiment thereof.

Some exemplary embodiments of the method of the third aspect are listed below.

According to at least one exemplary embodiment, the method comprises:
- detecting in the received image one or more predefined points of each pedal,
- determining, for each pedal, the position of said detected one or more predefined points in the provided image, and
- calculating, based on the determined position(s) of the one or more detected predefined points, the position of each pedal relative to the fixed structure or relative to its reference position.

According to at least one exemplary embodiment, the method comprises:
- receiving a sequence of captured images,
- comparing for at least one of said pedals the position of the pedal in two or more of the images in said sequence of images, to detect a positional change of the pedal, and
- controlling the associated actuator based on the detected positional change of the pedal.

According to a fourth aspect of the present invention, there is provided a computer program comprising program code means for performing the steps of the method according the third aspect, including any embodiment thereof, when said program is run on a computer. The advantages of the computer program of the fourth aspect are largely analogous to the advantages of the method of the third aspect, including any embodiment thereof.

According to a fifth aspect of the present invention, there is provided a computer readable medium carrying a computer program comprising program code means for performing the steps of the method according to the third aspect, including any embodiment thereof, when said program product is run on a computer. The advantages of the computer readable medium of the fifth aspect largely correspond to the advantages of the method of the third aspect, including any embodiment thereof.

According to a sixth aspect of the present invention, there is provided a control unit for controlling actuators based on pedal positions in a vehicle, the control unit being configured to perform the steps in the method according to the third aspect, including any embodiment thereof. The advantages of the control unit of the sixth aspect are largely analogous to the advantages of the method of the third aspect, including any embodiment thereof.

Generally, all terms used in the claims are to be interpreted according to their ordinary meaning in the technical field, unless explicitly defined otherwise herein. All references to "a/an/the part, element, portion, component, arrangement, device, means, step, etc." are to be interpreted openly as referring to at least one instance of the part, element, portion, component, arrangement, device, means, step, etc., unless explicitly stated otherwise. The steps of any method disclosed herein do not have to be performed in the exact order disclosed, unless explicitly stated. Further features of, and advantages with, the present inventive concept will become apparent when studying the appended claims and the following description. The skilled person realizes that different features of the present inventive concept may be combined to create embodiments other than those described in the following, without departing from the scope of the present inventive concept.

### BRIEF DESCRIPTION OF THE DRAWINGS

With reference to the appended drawings, below follows a more detailed description of embodiments of the invention cited as examples.

In the drawings:
Fig. 1 illustrates a vehicle in which a system according to at least one exemplary embodiment of the present invention may be implemented.
Fig. 2 is a schematic illustration of the a system according to at least one exemplary embodiment of the present invention.
Fig. 3 is a schematic illustration of pedals, for which exemplary embodiments of the system may be used.
Fig. 4 is a schematic illustration of another type of pedals, for which exemplary embodiments of the system may be used.
Figs. 5-7 schematically illustrate methods according to exemplary embodiments of the present invention.
Fig. 8 schematically illustrates a control unit according to at least one exemplary embodiment of the present invention.
Fig. 9 schematically illustrates a computer program product according to at least one exemplary embodiment of the present invention.

### DETAILED DESCRIPTION OF EXAMPLE EMBODIMENTS OF THE INVENTION

The invention will now be described more fully hereinafter with reference to the accompanying drawings, in which certain aspects of the invention are shown. The invention may, however, be embodied in many different forms and should not be construed as limited to the embodiments and aspects set forth herein; rather, the embodiments are provided by way of example so that this disclosure will be thorough and complete, and will fully convey the scope of the invention to those skilled in the art. Accordingly, it is to be understood that the present invention is not limited to the embodiments described herein and illustrated in the drawings; rather, the skilled person will recognize that many changes and modifications may be made within the scope of the appended claims. Like reference numerals refer to like elements throughout the description.

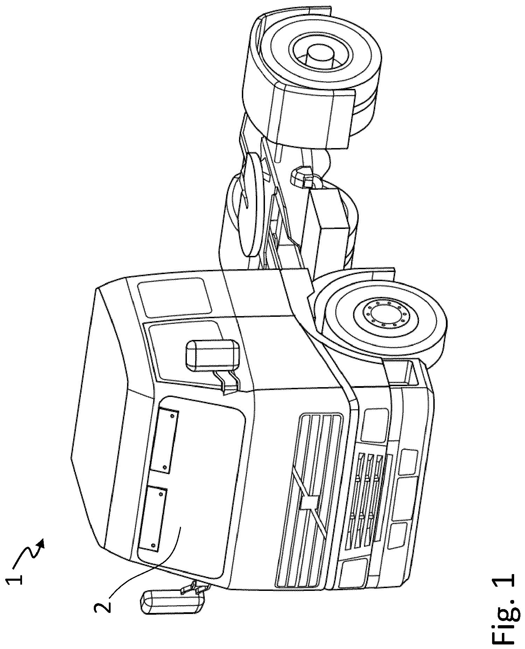

Fig. 1 illustrates a vehicle 1 in which a system according to at least one exemplary embodiment of the present invention may be implemented. In this example, the vehicle 1 is a heavy-duty vehicle in the form of a tractor unit. The tractor unit may, for instance, be powered by a propulsion system, such as including an internal combustion engine, electric motor, fuel cell engine, or a combination thereof. Although a tractor unit has been illustrated, it should be understood that the teachings of the present invention may also be implemented in other types of vehicles, such as busses, construction equipment and passenger cars. The illustrated vehicle 1 comprises a cabin 2 in which a driver may operate the vehicle 1. The vehicle 1 comprises pedals which the driver may depress with his/her feet to accelerate or decelerate the vehicle. In embodiments in which the vehicle has a manual gear shift, a pedal may also be provided for actuating a clutch when the driver wishes to shift gears.

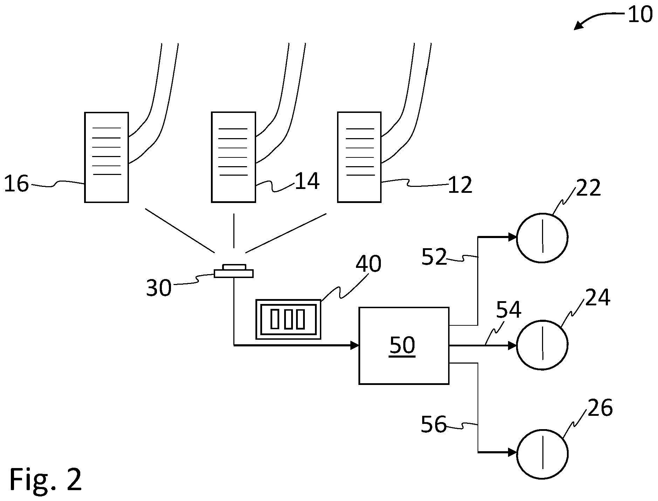

Fig. 2 is a schematic illustration of a system 10 according to at least one exemplary embodiment of the present invention. In Fig. 2 three pedals 12, 14, 16 are illustrated, however, the system 10 may also be implemented in vehicles having only two pedals. The pedals illustrated in Fig. 2, may for example be an accelerator pedal 12, a brake pedal 14 and a clutch pedal 16. As conventional, when a driver presses a pedal, a corresponding actuator 22, 24, 26 will be activated, whereby the propulsion, acceleration, deceleration, gear-shifting, etc. may be controlled.

Although it is known to use a control unit which translates pedal sensor signals into actuating signals for controlling the corresponding actuators, the general inventive concept achieves it in a new and efficient way, eliminating the need for individual sensors for each pedal.

The system 10 of the present general inventive concept uses a single camera 30 for capturing an image 40 containing all the pedals 12, 14, 16 (or containing portions of all the pedals 12, 14, 16). The captured imaged 40 is provided to a control unit 50 for analysis. Thus, the system 10 of Fig. 2 is a system 10 for controlling actuators 22, 24, 26 based on pedal positions in a vehicle. The system 10 comprises the control unit 50 and the camera 30. The camera 30 may suitably be a thermographic camera, even though the inventive principle could be implemented with other types of cameras as well. The camera 30 is configured to capture an image 40 containing two or more pedals (in this example, three pedals 12, 14, 16), and to provide the image 40 (suitably in the form of a digital image) to the control unit 50. In its turn, the control unit 50 is configured to determine for each pedal, 12, 14, 16, based on the provided image 40, the current position of the pedal relative to a fixed structure in the vehicle or relative to a reference position of the pedal. Then, based on the determined position, the control unit 50 is configured to control the actuator 22, 24, 26 associated with the pedal 12, 14, 16. Thus, the control unit 50 may be configured to send an acceleration signal 52, based on the determined position to the accelerator pedal 12, to the associated acceleration actuator 22. Similarly, the control unit 50 may be configured to send a brake signal 54, based on the determined position of the brake pedal 14, to an associated brake actuator 24. In embodiments in which a clutch pedal 16 is present and captured in the image 40 provided by the camera 30, the control unit 50 may be configured to send a clutch actuating signal 56 to an associated clutch actuator 26 based on the determined position of the clutch pedal 16.

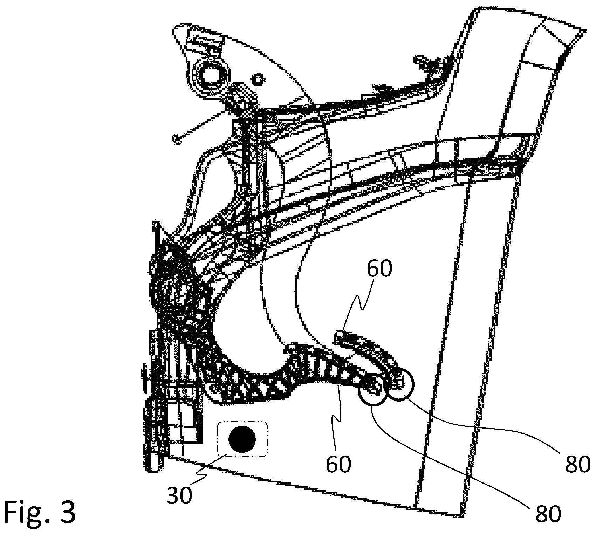

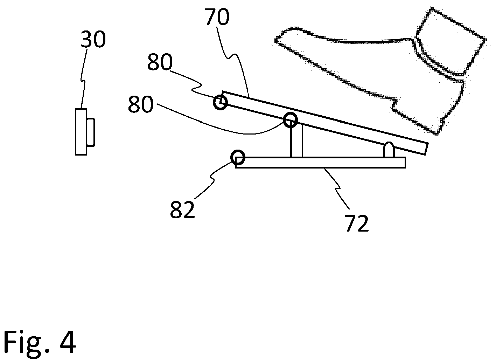

Fig. 3 and Fig. 4 illustrates two different types of pedals. In Fig. 3 two pedals 60 are shown of suspended type. The two pedals 60 may be an accelerator pedal and a brake pedal. In other examples, there may be a third pedal as well, e.g. a clutch pedal. In Fig. 4 another type of pedal 70 is illustrated, wherein the pedal 70 is connected to a base plate 72. A vehicle may suitably have two or more pedals of this type. The pedals 12, 14, 16 illustrated in the system 10 of Fig. 2 may be of either one of the types.

The base plate 72 in Fig. 4 represents a fixed structure which may conveniently be captured in an image together with the pedal 70. For the suspended types of pedals 60 in Fig. 3, it may be more appropriate to compare the captured image with a stored reference image, when the control unit determines the positions of the pedals 60.

As illustrated in Fig. 3 as well as in Fig. 4, each pedal may have one or more predefined points 80 which the control unit is configured to find in the image provided by the camera 30. As exemplified in Fig 3, the predefined points 80 may be at a respective edge of the pedals 60. However, another conceivable location may be the underside of the foot-receiving part of each pedal 60. Yet another conceivable location may be at the long shank part that extends from the foot-receiving part of each pedal 60. In either case, the camera 30 should be positioned so that it can capture all predefined points 80 in one image. As exemplified in Fig. 4. in at least some exemplary embodiments there may be two (or more) predefined points 80 on each pedal 70 for the control unit to detect in the image provided by the camera 30. This may improve the accuracy of the calculations made by the control unit.

When the control unit has identified the predefined points 80 in the image received from the camera 30 and determined their positions in the image, the control unit may, based on these determined positions, calculate the position of each pedal 60, 70. In the example of Fig. 3 the control unit would suitably calculate the position of each pedal 60 relative to their reference position. For instance, the control unit would suitably compare the positions of the predefined points 80 in the now captured and received image with their positions in a reference image (taken in an original non-depressed state of the pedals), which is suitably stored in an electronic memory accessible by the control unit. Thereby, the control unit can calculate the position of each pedal 60. In the example of Fig. 4, the captured image provided by the camera 30 would suitably also include the base plate 72 (i.e. a fixed structure). The base plate may suitably also have a predefined point 82. By comparing the position of the predefined points 80 of the pedal 70 with the position of the predefined point 82 of the base plate 72, the control unit can calculate to what extend the pedal 70 has been pressed.

With reference to Figs. 2-4, as already discussed, irrespective of the type of pedals used, the camera 30 may suitably be configured to capture and provide a sequence of images to the control unit 50. Suitably, the camera 30 continuously captures and provides images to the control unit 50 from the time the propulsion system of the vehicle is started/enabled. For each pedal 12, 14, 16, 60, 70, the control unit 50 may compare the position of the pedal in two or more of the images in said sequence of images to detect a positional change of the pedal. The control unit 50 may then control the associated actuator 22, 24, 26 based on the detected positional change of the pedal. For instance, for a brake pedal 14, if the positional change per unit of time is very large (e.g. exceeding a predetermined threshold), then the control unit 50 may suitably send an emergency brake signal to the brake actuator 24 associated with the brake pedal 14.

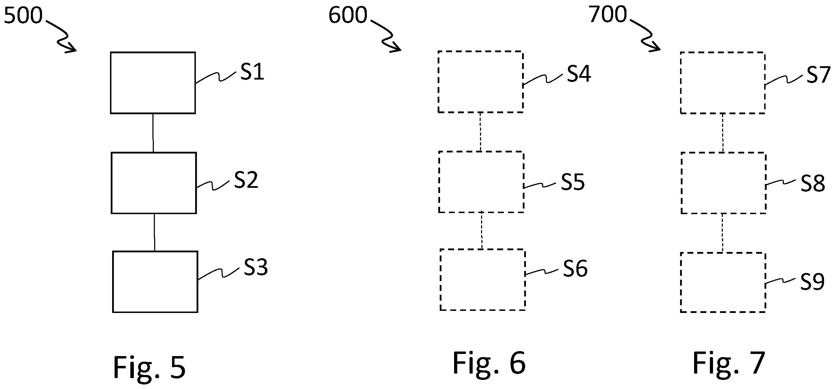

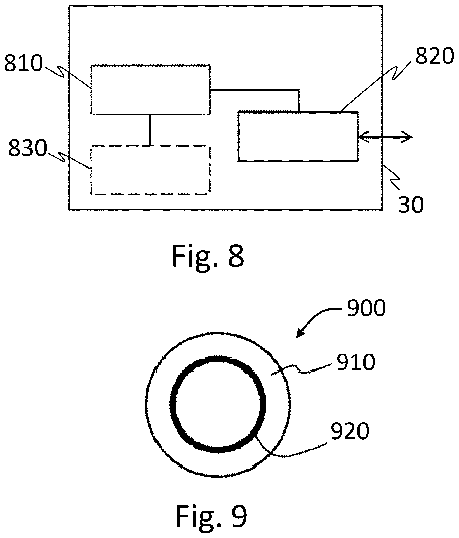

Turning now to Figs. 5-7, some different steps of non-limiting exemplary embodiments of the computer-implemented method of the present invention are illustrated. Such a computer-implemented method may suitably be performed by one or more control units, such as the control unit 50 illustrated in Fig. 2 or Fig. 8.

Fig. 5 illustrates schematically a method 500 in accordance with at least one exemplary embodiment of the present invention. More specifically, Fig. 5 illustrates a computer-implemented method 500 for controlling actuators based on pedal positions in a vehicle, comprising:
- in a step S1, receiving from a camera a captured image containing two or more pedals in a vehicle,
- in a step S2, determining for each pedal based on the received image, the position of the pedal relative to a fixed structure in the vehicle or relative to a reference position of the pedal, and
- in a step S3, controlling based on the determined position, an actuator associated with the pedal.

Fig. 6 illustrates schematically a computer-implemented method 600 in accordance with at least another exemplary embodiment of the present invention. This exemplary embodiment may include all the steps S1-S3 of the method 500 and additionally include the illustrated steps S4-S6. Steps S4-S6 may actually be considered to represent substeps to step S2. Thus, the method 600 may comprise:
- in a step S4, detecting in the received image one or more predefined points of each pedal,
- determining, in a step S5, for each pedal, the position of said detected one or more predefined points in the provided image, and
- calculating, in a step S6, based on the determined position(s) of the one or more detected predefined points, the position of each pedal relative to the fixed structure or relative to its reference position.

Fig. 7 illustrates schematically a computer-implemented method 700 in accordance with yet another exemplary embodiment of the present invention. This exemplary embodiment may include all the steps S1-S3 of the method 500, and additionally includes the illustrated steps S7-S9. Furthermore, the method 700 may additionally include the steps S4-S6 of method 600. Thus, the method 700 may comprise:
- in a step S7, receiving a sequence of captured images,
- in a step S8, comparing for at least one of said pedals the position of the pedal in two or more of the images in said sequence of images, to detect a positional change of the pedal, and
- in a step S9, controlling the associated actuator based on the detected positional change of the pedal.

Fig. 8 schematically illustrates a control unit 50 according to at least one exemplary embodiment of the present invention. In particular, Fig. 8 illustrates, in terms of a number of functional units, the components of a control unit 50 according to exemplary embodiments of the discussions herein. The control unit 50 may be comprised in any vehicle disclosed herein, such as the one illustrated in Fig. 1, and others discussed above. Processing circuitry 810 may be provided using any combination of one or more of a suitable central processing unit CPU, multiprocessor, microcontroller, digital signal processor DSP, etc., capable of executing software instructions stored in a computer program product, e.g. in the form of a storage medium 830. The processing circuitry 810 may further be provided as at least one application specific integrated circuit ASIC, or field programmable gate array FPGA.

Particularly, the processing circuitry 810 is configured to cause the control unit 50 to perform a set of operations, or steps, such as the method discussed in connection to Fig. 5, Fig. 6 and/or Fig. 7 and exemplary embodiments thereof discussed throughout this invention. For example, the storage medium 830 may store the set of operations, and the processing circuitry 810 may be configured to retrieve the set of operations from the storage medium 830 to cause the control unit 50 to perform the set of operations. The set of operations may be provided as a set of executable instructions. Thus, the processing circuitry 810 is thereby arranged to execute exemplary methods as herein disclosed.

The storage medium 830 may also comprise persistent storage, which, for example may be any single one or combination of magnetic memory, optical memory, solid state memory or even remotely mounted memory.

The control unit 50 may further comprise an interface 820 for communications with at least one external device such as the camera 30 and the actuators 22, 24, 26 discussed herein. As such, the interface 820 may comprise one or more transmitters and receivers, comprising analogue and digital components and a suitable number of ports for wireline or wireless communication.

The processing circuitry 810 controls the general operation of the control unit 50, e.g. by sending data and control signals to the interface 820 and the storage medium 830, by receiving data and reports from the interface 820, and by retrieving data and instructions form the storage medium 830. Other components, as well as the related functionality, of the control unit 50 are omitted in order not to obscure the concepts presented herein.

Fig. 9 schematically illustrates a computer program product 900 according to at least one exemplary embodiment of the present invention. More specifically, Fig. 8 illustrates a computer readable medium 910 carrying a computer program comprising program code means 920 for performing the methods exemplified in Fig. 5, Fig. 6 and/or Fig. 7, when said program product is run on a computer. The computer readable medium 910 and the program code means 920 may together form the computer program product 900.

## Claims

1. A system (10) for controlling actuators (22, 24, 26) based on pedal positions in a vehicle (1), comprising:
- a control unit (50),
- a camera (30) configured to capture an image (40) containing two or more pedals (12, 14, 16, 60, 70) in a vehicle and to provide the image to the control unit, **characterised in that** the control unit is configured to:
• determine for each pedal, based on the provided image, the current position of the pedal relative to a fixed structure (72) in the vehicle or relative to a reference position of the pedal, and
• control, based on the determined position, an actuator (22, 24, 26) associated with the pedal (12, 14, 16).

2. The system (10) according to claim 1, wherein, for each pedal (12, 14, 16, 60, 70), the control unit (50) is configured to:
- detect in the provided image (40) one or more predefined points (80) on the pedal,
- determine the position(s) of the detected one or more predefined points in the provided image, and
- calculate, based on the determined position(s) of the one or more detected predefined points, the position of each pedal relative to the fixed structure (72) or relative to its reference position.

3. The system (10) according to any one of claims 1-2, wherein the camera (30) is configured to capture and provide a sequence of images, wherein for at least one of said pedals (12, 14, 16, 60, 70), the control unit (50) is configured to:
- compare the position of the pedal in two or more of the images in said sequence of images, to detect a positional change of the pedal, and
- control the associated actuator (22, 24, 26) based on the detected positional change of the pedal.

4. The system (10) according to claim 3, wherein one of said pedals is a brake pedal (14), wherein the control unit (50) is configured to send an emergency brake signal (54) to a brake actuator (24) associated with the brake pedal when the detected positional change per unit of time exceeds a predetermined threshold.

5. The system (10) according to any one of claims 1-4, wherein said camera (30) is a thermographic camera configured to capture and create images by using infrared radiation emitted from said pedals (12, 14, 16, 60, 70).

6. The system (10) according to any one of claims 1-5, wherein at least one of the pedals (70) is connected to a base plate (72), wherein said fixed structure comprises said base plate, wherein the control unit (50) is configured to determine for said at least one of the pedals, based on the provided image (40), the position of the pedal relative to its connected base plate.

7. The system (10) according to any one of claims 1-6, comprising an electronic memory in which a reference image is stored, the reference image containing said two or more pedals when they are in their respective non-pressed original positions, wherein the control unit (50) comprises or has access to said electronic memory, wherein the control unit is configured to determine the position of each pedal by comparing the captured image (40) provided by the camera (30) with said reference image.

8. The system (10) according to any one of claims 1-7, wherein the camera (30) is configured to capture an image (40) containing an accelerator pedal (12, 60) and a brake pedal (14, 60) , wherein the control unit (50) is configured to:
- send an acceleration signal (52), based on the determined position of the accelerator pedal, to an associated acceleration actuator (22),
- a brake signal (54), based on the determined position of the brake pedal, to an associated brake actuator (24).

9. The system (10) according to claim 8, wherein the captured image (40) further contains a clutch pedal (16), wherein the control unit (50) is configured to send a clutch actuating signal (56) to a clutch actuator (26) based on the determined position of the clutch pedal.

10. A vehicle (1) comprising a system (10) according to any one of claims 1-9.

11. A computer-implemented method (500, 600, 700) for controlling actuators based on pedal positions in a vehicle, comprising:
- receiving (S1) from a camera a captured image containing two or more pedals in a vehicle,
- determining (S2) for each pedal based on the received image, the position of the pedal relative to a fixed structure in the vehicle or relative to a reference position of the pedal, and
- controlling (S3) based on the determined position, an actuator associated with the pedal.

12. The method (500) according to claim 11, comprising:
- detecting (S4) in the received image one or more predefined points of each pedal,
- determining (S5), for each pedal, the position of said detected one or more predefined points in the provided image, and
- calculating (S6), based on the determined position(s) of the one or more detected predefined points, the position of each pedal relative to the fixed structure or relative to its reference position.

13. The method (600) according to any one of claims 11-12, comprising:
- receiving (S7) a sequence of captured images,
- comparing (S8) for at least one of said pedals the position of the pedal in two or more of the images in said sequence of images, to detect a positional change of the pedal, and
- controlling (S9) the associated actuator based on the detected positional change of the pedal.

14. A computer program comprising program code means (920) for performing the steps of the method (500, 600, 700) according to any one of claims 11-13 when said program is run on a computer.

15. A computer readable medium (910) carrying a computer program comprising program code means (920) for performing the steps of the method (500, 600, 700) according to any one of claims 11-13 when said program product is run on a computer.

## Patentansprüche

1. System (10) zum Steuern von Aktuatoren (22, 24, 26) basierend auf Pedalstellungen in einem Fahrzeug (1), umfassend:
- eine Steuereinheit (50),
- eine Kamera (30), die dazu konfiguriert ist, ein Bild (40), das zwei oder mehr Pedale (12, 14, 16, 60, 70) in einem Fahrzeug enthält, zu erfassen und das Bild der Steuereinheit bereitzustellen,
**dadurch gekennzeichnet, dass** die Steuereinheit zu Folgendem konfiguriert ist:
• Ermitteln für jedes Pedal, basierend auf dem bereitgestellten Bild, der aktuellen Stellung des Pedals relativ zu einer festen Struktur (72) in dem Fahrzeug oder relativ zu einer Referenzstellung des Pedals und
• Steuern, basierend auf der ermittelten Stellung, eines Aktuators (22, 24, 26), der dem Pedal (12, 14, 16) zugeordnet ist.

2. System (10) nach Anspruch 1, wobei, für jedes Pedal (12, 14, 16, 60, 70), die Steuereinheit (50) zu Folgendem konfiguriert ist:
- Erkennen in dem bereitgestellten Bild (40) eines oder mehrerer vordefinierter Punkte (80) auf dem Pedal,
- Ermitteln der Stellung(en) des erkannten einen oder der erkannten mehreren vordefinierten Punkte in dem bereitgestellten Bild und
- Berechnen, basierend auf der/den ermittelten Stellung(en) des einen oder der mehreren erkannten vordefinierten Punkte, der Stellung jedes Pedals relativ zu der festen Struktur (72) oder relativ zu dessen Referenzstellung.

3. System (10) nach einem der Ansprüche 1-2, wobei die Kamera (30) dazu konfiguriert ist, eine Sequenz von Bildern zu erfassen und bereitzustellen, wobei, für mindestens eines der Pedale (12, 14, 16, 60, 70), die Steuereinheit (50) zu Folgendem konfiguriert ist:
- Vergleichen der Stellung des Pedals in zwei oder mehr der Bilder in der Sequenz von Bildern, um eine Stellungsänderung des Pedals zu erkennen, und
- Steuern des zugeordneten Aktuators (22, 24, 26) basierend auf der erkannten Stellungsänderung des Pedals.

4. System (10) nach Anspruch 3, wobei eines der Pedale ein Bremspedal (14) ist, wobei die Steuereinheit (50) dazu konfiguriert ist, ein Notfallbremssignal (54) an einen Bremsaktuator (24), der dem Bremspedal zugeordnet ist, zu senden, wenn die erkannte Stellungsänderung pro Zeiteinheit einen vorgegebenen Schwellenwert überschreitet.

5. System (10) nach einem der Ansprüche 1-4, wobei die Kamera (30) eine Wärmebildkamera ist, die dazu konfiguriert ist, Bilder unter Verwendung von Infrarotstrahlung, die von den Pedalen (12, 14, 16, 60, 70) abgegeben wird, zu erfassen und zu erstellen.

6. System (10) nach einem der Ansprüche 1-5, wobei mindestens eines der Pedale (70) mit einer Grundplatte (72) verbunden ist, wobei die feste Struktur die Grundplatte umfasst, wobei die Steuereinheit (50) dazu konfiguriert ist, für das mindestens eine der Pedale, basierend auf dem bereitgestellten Bild (40), die Stellung des Pedals relativ zu seiner verbundenen Grundplatte zu ermitteln.

7. System (10) nach einem der Ansprüche 1-6, umfassend einen elektronischen Speicher, in dem ein Referenzbild gespeichert ist, wobei das Referenzbild die zwei oder mehr Pedale enthält, wenn sie sich in ihren jeweiligen nicht gedrückten Ausgangsstellungen befinden, wobei die Steuereinheit (50) den elektronischen Speicher umfasst oder Zugriff auf diesen hat, wobei die Steuereinheit dazu konfiguriert ist, die Stellung jedes Pedals durch Vergleichen des erfassten Bilds (40), das durch die Kamera (30) bereitgestellt wird, mit dem Referenzbild zu ermitteln.

8. System (10) nach einem der Ansprüche 1-7, wobei die Kamera (30) dazu konfiguriert ist, ein Bild (40), das ein Fahrpedal (12, 60) und ein Bremspedal (14, 60) enthält, zu erfassen, wobei die Steuereinheit (50) zu Folgendem konfiguriert ist:
- Senden eines Fahrsignals (52), basierend auf der ermittelten Stellung des Fahrpedals, an einen zugeordneten Beschleunigungsaktuator (22),
- Senden eines Bremssignals (54), basierend auf der ermittelten Stellung des Bremspedals, an einen zugeordneten Bremsaktuator (24).

9. System (10) nach Anspruch 8, wobei das erfasste Bild (40) ferner ein Kupplungspedal (16) enthält, wobei die Steuereinheit (50) dazu konfiguriert ist, basierend auf der ermittelten Stellung des Kupplungspedals ein Kupplungsbetätigungssignal (56) an einen Kupplungsaktuator (26) zu senden.

10. Fahrzeug (1), umfassend ein System (10) nach einem der Ansprüche 1-9.

11. Computerimplementiertes Verfahren (500, 600, 700) zum Steuern von Aktuatoren basierend auf Pedalstellungen in einem Fahrzeug, umfassend:
- Empfangen (S1), von einer Kamera, eines erfassten Bilds, das zwei oder mehr Pedale in einem Fahrzeug enthält,
- Ermitteln (S2), für jedes Pedal basierend auf dem empfangenen Bild, der Stellung des Pedals relativ zu einer festen Struktur in dem Fahrzeug oder relativ zu einer Referenzstellung des Pedals und
- Steuern (S3), basierend auf der ermittelten Stellung, eines Aktuators, der dem Pedal zugeordnet ist.

12. Verfahren (500) nach Anspruch 11, umfassend:
- Erkennen (S4), in dem empfangenen Bild, eines oder mehrerer vordefinierter Punkte jedes Pedals,
- Ermitteln (S5), für jedes Pedal, der Stellung des erkannten einen oder der erkannten mehreren vordefinierten Punkte in dem bereitgestellten Bild und
- Berechnen (S6), basierend auf der/den ermittelten Stellung(en) des einen oder der mehreren erkannten vordefinierten Punkte, der Stellung jedes Pedals relativ zu der festen Struktur oder relativ zu dessen Referenzstellung.

13. Verfahren (600) nach einem der Ansprüche 11-12, umfassend:
- Empfangen (S7) einer Sequenz von erfassten Bildern,
- Vergleichen (S8), für mindestens eines der Pedale, der Stellung des Pedals in zwei oder mehr der Bilder in der Sequenz von Bildern, um eine Stellungsänderung des Pedals zu erkennen, und
- Steuern (S9) des zugeordneten Aktuators basierend auf der erkannten Stellungsänderung des Pedals.

14. Computerprogramm, umfassend Programmcodemittel (920) zum Durchführen der Schritte des Verfahrens (500, 600, 700) nach einem der Ansprüche 11-13, wenn das Programm auf einem Computer ausgeführt wird.

15. Computerlesbares Medium (910), das ein Computerprogramm trägt, das Programmcodemittel (920) zum Durchführen der Schritte des Verfahrens (500, 600, 700) nach einem der Ansprüche 11-13 umfasst, wenn das Programmprodukt auf einem Computer ausgeführt wird.

## Revendications

1. Système (10) de commande d'actionneurs (22, 24, 26) en fonction de positions de pédales dans un véhicule (1), comprenant :
- une unité de commande (50),
- une caméra (30) configurée pour capturer une image (40) contenant deux pédales ou plus (12, 14, 16, 60, 70) dans un véhicule et pour fournir l'image à l'unité de commande, **caractérisé en ce que** l'unité de commande est configurée pour :
• déterminer pour chaque pédale, sur la base de l'image fournie, la position actuelle de la pédale par rapport à une structure fixe (72) dans le véhicule ou par rapport à une position de référence de la pédale, et
• commander, en fonction de la position déterminée, un actionneur (22, 24, 26) associé à la pédale (12, 14, 16).

2. Système (10) selon la revendication 1, dans lequel, pour chaque pédale (12, 14, 16, 60, 70), l'unité de commande (50) est configurée pour :
- détecter dans l'image fournie (40) un ou plusieurs points prédéfinis (80) sur la pédale,
- déterminer les une ou plusieurs positions des un ou plusieurs points prédéfinis détectés dans l'image fournie, et
- calculer, en fonction des une ou plusieurs positions déterminées des un ou plusieurs points prédéfinis détectés, la position de chaque pédale par rapport à la structure fixe (72) ou par rapport à sa position de référence.

3. Système (10) selon l'une quelconque des revendications 1 et 2, dans lequel la caméra (30) est configurée pour capturer et fournir une séquence d'images, dans lequel pour au moins l'une desdites pédales (12, 14, 16, 60, 70), l'unité de commande (50) est configurée pour :
- comparer la position de la pédale dans deux images ou plus de ladite séquence d'images, pour détecter un changement de position de la pédale, et
- commander l'actionneur associé (22, 24, 26) sur la base du changement de position détecté de la pédale.

4. Système (10) selon la revendication 3, dans lequel l'une desdites pédales est une pédale de frein (14), dans lequel l'unité de commande (50) est configurée pour envoyer un signal de freinage d'urgence (54) à un actionneur de frein (24) associé à la pédale de frein lorsque le changement de position détecté par unité de temps dépasse un seuil prédéterminé.

5. Système (10) selon l'une quelconque des revendications 1 à 4, dans lequel ladite caméra (30) est une caméra thermographique configurée pour capturer et créer des images en utilisant un rayonnement infrarouge émis par lesdites pédales (12, 14, 16, 60, 70).

6. Système (10) selon l'une quelconque des revendications 1 à 5, dans lequel au moins une des pédales (70) est reliée à une plaque de base (72), dans lequel ladite structure fixe comprend ladite plaque de base, dans lequel l'unité de commande (50) est configurée pour déterminer pour ladite au moins l'une des pédales, sur la base de l'image fournie (40), la position de la pédale par rapport à sa plaque de base reliée.

7. Système (10) selon l'une quelconque des revendications 1 à 6, comprenant une mémoire électronique dans laquelle une image de référence est stockée, l'image de référence contenant lesdites deux pédales ou plus lorsqu'elles sont dans leurs positions d'origine respectives non enfoncées, dans lequel l'unité de commande (50) comprend ou a accès à ladite mémoire électronique, dans lequel l'unité de commande est configurée pour déterminer la position de chaque pédale en comparant l'image capturée (40) fournie par la caméra (30) avec ladite image de référence.

8. Système (10) selon l'une quelconque des revendications 1 à 7, dans lequel la caméra (30) est configurée pour capturer une image (40) contenant une pédale d'accélérateur (12, 60) et une pédale de frein (14, 60), dans lequel l'unité de commande (50) est configurée pour :
- envoyer un signal d'accélération (52), sur la base de la position déterminée de la pédale d'accélérateur, à un actionneur d'accélération associé (22),
- un signal de freinage (54), sur la base de la position déterminée de la pédale de frein, à un actionneur de frein associé (24).

9. Système (10) selon la revendication 8, dans lequel l'image capturée (40) contient en outre une pédale d'embrayage (16), dans lequel l'unité de commande (50) est configurée pour envoyer un signal d'actionnement d'embrayage (56) à un actionneur d'embrayage (26) sur la base de la position déterminée de la pédale d'embrayage.

10. Véhicule (1) comprenant un système (10) selon l'une quelconque des revendications 1 à 9.

11. Procédé mis en œuvre par ordinateur (500, 600, 700) de commande d'actionneurs en fonction des positions de pédales dans un véhicule, comprenant :
- la réception (S1), depuis une caméra, d'une image capturée contenant deux pédales ou plus dans un véhicule,
- la détermination (S2) pour chaque pédale sur la base de l'image reçue, de la position de la pédale par rapport à une structure fixe dans le véhicule ou par rapport à une position de référence de la pédale, et
- la commande (S3) en fonction de la position déterminée, d'un actionneur associé à la pédale.

12. Procédé (500) selon la revendication 11, comprenant :
- la détection (S4) dans l'image reçue, d'un ou plusieurs points prédéfinis de chaque pédale,
- la détermination (S5), pour chaque pédale, de la position desdits un ou plusieurs points prédéfinis détectés dans l'image fournie, et
- le calcul (S6), en fonction des une ou plusieurs positions déterminées des un ou plusieurs points prédéfinis détectés, de la position de chaque pédale par rapport à la structure fixe (72) ou par rapport à sa position de référence.

13. Procédé (600) selon l'une quelconque des revendications 11 et 12, comprenant :
- la réception (S7) d'une séquence d'images capturées,
- la comparaison (S8) pour au moins une desdites pédales, de la position de la pédale dans deux images ou plus de ladite séquence d'images, pour détecter un changement de position de la pédale, et
- la commande (S9) de l'actionneur associé sur la base du changement de position détecté de la pédale.

14. Programme informatique comprenant des moyens de code de programme (920) pour mettre en œuvre les étapes du procédé (500, 600, 700) selon l'une quelconque des revendications 11 à 13 lorsque ledit programme est exécuté sur un ordinateur.

15. Support lisible par ordinateur (910) portant un programme informatique comprenant des moyens de code de programme (920) pour mettre en œuvre les étapes du procédé (500, 600, 700) selon l'une quelconque des revendications 11 à 13 lorsque ledit produit de programme est exécuté sur un ordinateur.
